Europäisches Patentamt

European Patent Office

Office européen des brevets

(19)

(11) Veröffentlichungsnummer: **0 018 612**
**B1**

(12) **EUROPÄISCHE PATENTSCHRIFT**

(45) Veröffentlichungstag der Patentschrift:
**27.04.83**

(21) Anmeldenummer: **80102267.4**

(22) Anmeldetag: **26.04.80**

(51) Int. Cl.³: **E 06 B 3/26,** B 05 D 7/22,
B 32 B 1/00

(54) Verfahren zum Herstellen von wärmeisolierenden Verbundprofilen.

(30) Priorität: **30.04.79 DE 2917578**

(43) Veröffentlichungstag der Anmeldung:
**12.11.80 Patentblatt 80/23**

(45) Bekanntmachung des Hinweises auf die Patenterteilung:
**27.04.83 Patentblatt 83/17**

(84) Benannte Vertragsstaaten:
**AT CH FR GB IT LI NL SE**

(56) Entgegenhaltungen:
**CA-A-1 043 644**
**DE-A-1 729 308**
**DE-A-2 305 823**
**FR-A-1 138 912**
**FR-A-2 390 575**

(73) Patentinhaber: **Mühle, Manfred, Tulpenstrasse 11,
D-4972 Löhne 2 (DE)**

(72) Erfinder: **Mühle, Manfred, Tulpenstrasse 11,
D-4972 Löhne 2 (DE)**

(74) Vertreter: **Hentzschel, Hans-Jürgen, Dipl.-Ing., Am
Hohen Ufer 8, D-4970 Bad Oeynhausen 1 (DE)**

## Verfahren zum Herstellen von wärmeisolierenden Verbundprofilen

Die Erfindung betrifft ein Verfahren zum Herstellen von wärmeisolierenden Verbundprofilen, welche aus mindestens zwei Metallprofilen sowie einem in einen zwischen diesen Metallprofilen vorgesehenen Freiraum in flüssiger Form eingebrachten Isoliermaterial gebildet werden, wobei das Isoliermaterial im erhärteten Zustand den Freiraum in der Art von die Metallprofile miteinander verbindenden Brücken nur teilweise ausfüllt und nach Erhärtung des Isoliermaterials an gegenüberliegenden Längsseiten des Freiraumes die metallische Verbindung unterbrochen wird. Diese von dem Isoliermaterial gebildeten Brücken sollen vor allem bei grossen Profilquerschnitten den Verbrauch an Isoliermaterial herabsetzen und damit die Herstellungskosten senken. Ausserdem lassen sich aufgrund des zwischen den Verbindungsbrücken unausgefüllt bleibenden Freiraumes günstigere Isolierwerte erzielen.

Es sind mehrere Herstellungsverfahren für wärmeisolierende Verbundprofile bekannt, bei denen die zwischen den Metallprofilen anzuordnenden Verbindungsbrücken dadurch zustande kommen, dass der rinnenförmig ausgebildete Freiraum zunächst nur teilweise mit dem flüssigen Isoliermaterial ausgegossen, anschliessend mit Abstand oberhalb von dieser Schicht eine Trennleiste in den Freiraum eingeschoben und hierauf sodann die nächste Isolierschicht aufgebracht wird (siehe z.B. FR-A Nr. 2390575). Ebenso ist anstelle der Trennleiste bereits die Verwendung von Hohlprofilen vorgeschlagen worden. Sowohl die Trennleisten als auch solche Hohlprofile können entweder im Freiraum verbleiben oder sollen in manchen der bekannten Verfahren nach dem Erhärten des Isoliermaterials wieder herausgezogen werden. In jedem Falle ergeben sich hierdurch zahlreiche recht zeitaufwendige Arbeitsgänge, die einer wirtschaftlichen Fertigung der Verbundprofile entgegenstehen.

Aus den vorgenannten Gründen ist es die Aufgabe der Erfindung, ein Verfahren der eingangs genannten Art zu schaffen, das einen kontinuierlicheren und schnelleren Fertigungsablauf ermöglicht. Dazu soll auf jegliche in den Freiraum einzubringende Trennmittel verzichtet werden und die Bildung der Verbindungsbrücken in einem einzigen Arbeitsgang erfolgen. Gleichzeitig hat die Erfindung das Ziel, die zwischen den Verbindungsbrücken befindlichen einander zugekehrten Metallflächen mit einer Isoliermaterialschicht zu überziehen und insofern auf Temperaturstrahlungen beruhende Wärmeverluste herabzusetzen. Dieser isolierende Überzug soll hierbei möglichst dünnschichtig sein, um die mit ihm angestrebte bessere Isolierwirkung aus Kostenersparnisgründen mit dem geringsten Isoliermaterialverbrauch erreichen zu können.

Die erfindungsgemässe Lösung der gestellten Aufgabe geht aus dem Anspruch 1 hervor. Vorteilhafte Weiterbildungen sind in den Unteransprüchen angegeben. Mit dem Verfahren nach der Erfindung gelingt es, die beiderseits eines Freiraumes angeordneten Metallprofile von wärmeisolierenden Verbundprofilen auf einfachstem und schnellstem Wege durch Brücken aus in flüssiger Form eingebrachtem Isoliermaterial miteinander zu verbinden. Ausserdem wird der Freiraum rundum mit einer Isoliermaterialschicht ausgestattet, die auch Wärmeverluste durch Temperaturstrahlungen einschränkt. Eine derartige Ausbildung ist zwar an sich auch bereits in Fig. 1 der FR-A Nr. 1138912 aufgezeigt, doch wird in dieser Druckschrift nicht näher dargestellt, wie diese Ausbildung bei Verwendung von flüssigem Isoliermaterial erreicht werden kann. Die Stärke der Isoliermaterialschicht kann bei dem erfindungsgemässen Verfahren durch geeignete Massnahmen sehr dünn gehalten und infolgedessen der Materialverbrauch verringert werden. Ebenso wird das Einbringen mehrerer übereinander liegender Schichten aus Isoliermaterial unterschiedlicher Qualität möglich, so dass für die Brückenbildung höherwertiges und für die lediglich gegen den Strahlungsübergang gerichtete innere Isolierschicht kostengünstigeres Material Verwendung finden kann.

Ausführungsbeispiele der Erfindung werden an Hand der Zeichnungen beschrieben. Darin zeigen im einzelnen:

Fig. 1: die schematische Darstellung einer zur Durchführung des erfindungsgemässen Verfahrens dienenden Vorrichtung,

Fig. 2: die Stirnansicht eines mit der in Fig. 1 wiedergegebenen Vorrichtung hergestellten Verbundprofils,

Fig. 3: das aus Fig. 2 hervorgehende Verbundprofil in seiner endgültigen wärmeisolierenden Form,

Fig. 4 u. 5: die Stirnansichten anderer nach der Erfindung hergestellter wärmeisolierender Verbundprofile,

Fig. 6 u. 7: weitere Ausgestaltungen der in Fig. 1 abgebildeten Vorrichtung im Grundriss, und

Fig. 8 u. 9: nochmalige mögliche Abwandlungen der Vorrichtung aus Fig. 1.

Die zur Beschreibung gelangende Vorrichtung ist zur Durchführung eines Verfahrens bestimmt, mit dem wärmeisolierende Verbundprofile insbesondere für den Tür- und Fensterbau herstellbar sind. Bei solchen Verbundprofilen ist zwischen der jeweils aus Metallprofilen gebildeten Innen- und Aussenschale eine Zone schlechter Temperaturleitfähigkeit vorgesehen, die zum Erreichen günstiger Isolierwerte innerhalb des Verbundprofils eine thermische Unterbrechung bewirken soll.

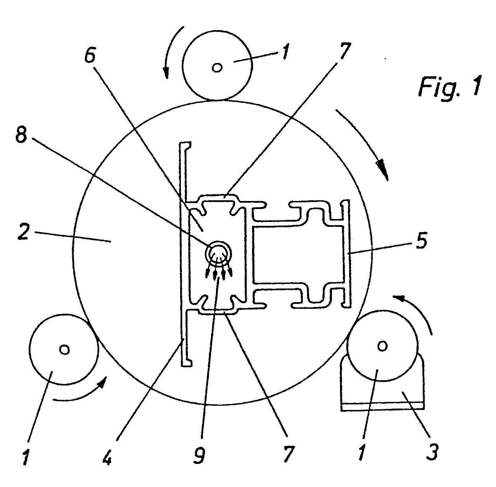

Die aus Fig. 1 ersichtliche Vorrichtung verfügt über eine auf Führungsrollen 1 abgestützte zylindrische Halterung 2, wobei eine der Führungsrollen 1 einen motorischen Antrieb 3 besitzt. In die besagte zylindrische Halterung 2 werden zwei für das zu fertigende Verbundprofil erforderliche, dessen Innen- und Aussenschale darstellende Metallprofile 4 und 5 eingelegt. Sie bilden zwischen ihren einander zugekehrten Wandflächen einen Freiraum 6, der zunächst noch an den zwei metallisch nicht verbundenen Längsseiten des Verbundprofils durch Verbindungsstege 7 geschlossen ist.

In den zwischen den Metallprofilen 4 und 5 vorhandenen Freiraum 6 wird sodann zentrisch zu den Führungsrollen 1 ein Einfüllrohr 8 eingeführt und anschliessend die Halterung 2 mit den Metallprofilen 4 und 5 um dieses Einfüllrohr 8 in rotierende Bewegung versetzt. Lässt man anschliessend durch das Einfüllrohr 8 in flüssiger Form befindliches Isoliermaterial in Richtung der Pfeile 9 in den Freiraum 6 eintreten, so wird es aufgrund der Rotation der Metallprofile 4/5 gleichmässig axial sowie ringförmig im Freiraum 6 verteilt, wo es sich demnach sowohl an den Metallprofilen 4 und 5 als auch an den Verbindungsstegen 7 absetzt.

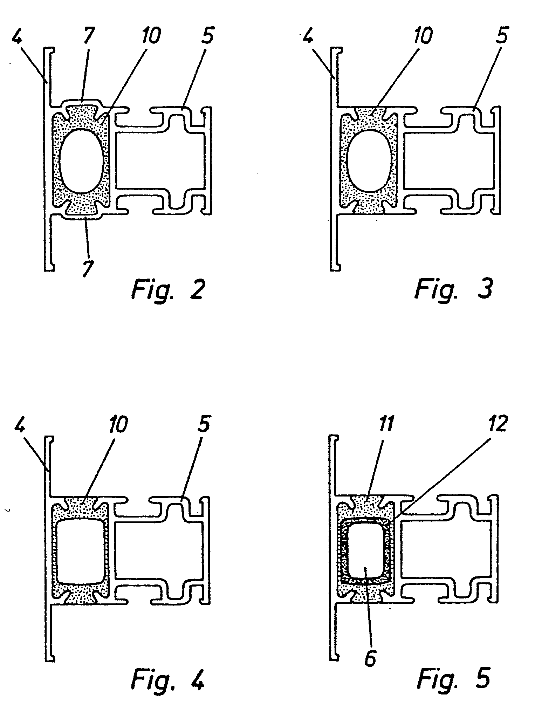

Da das in Fig. 2 im erhärteten Zustand gezeichnete Isoliermaterial 10 zur Bildung von den selbständigen Zusammenhalt der Metallprofile 4 und 5 bewirkenden Verbindungsbrücken führt, können nun die ursprünglich zwischen den Metallprofilen 4 und 5 vorhandenen Verbindungsstege 7 abgetrennt werden, woraufhin sich das aus Fig. 3 zu ersehende Verbundprofil ergibt, das keine metallische Verbindung mehr zwischen den Metallprofilen 4 und 5 aufweist. Das jetzt hierzu dienende erhärtete Isoliermaterial 10 steht nicht nur in der gewünschten Weise einem unmittelbaren Kälte- bzw. Wärmeübergang zwischen den Metallprofilen 4 und 5 im Wege, sondern verhindert diesen auch durch Temperaturstrahlung der einander zugewandten Profilflächen.

Nach einem weiteren Merkmal der Erfindung wäre es ausserdem möglich, das in diesem Falle mit radialen Sprühdüsen auszustattende Einfüllrohr 8 gegensinnig zu den Metallprofilen 4 und 5 um seine Längsachse rotieren zu lassen und dadurch gemäss Fig. 4 die Brückenbildung des Isoliermaterials 10 zwischen den Metallprofilen 4 und 5 zu verstärken, während sich die Schichtdikke an den Profilwänden gleichzeitige verringern würde. Diese Wirkung liesse sich andererseits ebenso mit einer grösseren Rotationsgeschwindigkeit der die Metallprofile 4 und 5 aufnehmenden Halterung 2 der Fig. 1 erreichen.

Würde ferner eine Regelbarkeit des motorischen Antriebs 3 der Halterung 2 oder gegebenenfalls auch der Umlaufgeschwindigkeit des Einfüllrohres 8 vorgesehen, hätte man zusätzlich die Möglichkeit, das Isoliermaterial nacheinander zweischichtig in den Freiraum 6 einzubringen. Die so entstehenden beiden Isolierschichten 11 und 12 der Fig. 5 könnten zweckmässigerweise von unterschiedlicher Dichte sein, was den Materialbedarf für die innere, nur den Strahlungsübergang verhindernde Isolierschicht 12 vor allem bei Profilen mit einem ausgedehnten Freiraum 6 wesentlich verringern würde. Ferner käme für die beiden Isolierschichten 11 und 12 ohne weiteres auch die Verwendung verschiedener Isoliermaterialien in Betracht, womit sich die innere Isolierschicht 12 gleichermassen kostengünstig herstellen liesse.

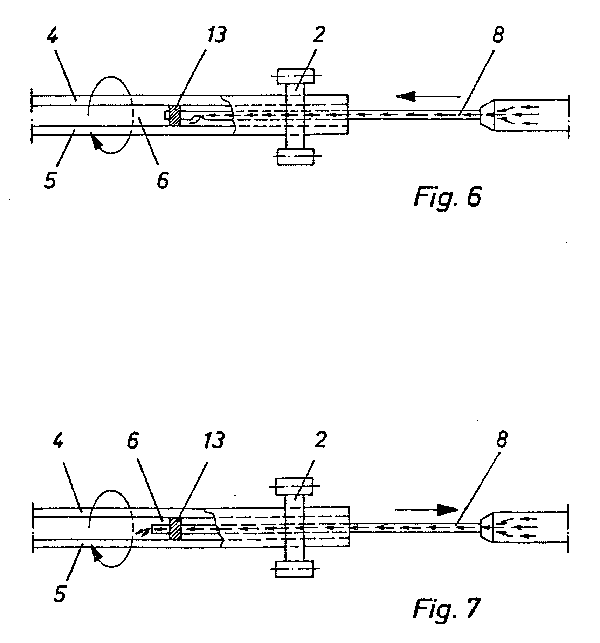

Für die Fertigung von Verbundprofilen grösserer Länge dürfte es erforderlich sein, dass die Metallprofile 4/5 und das Einfüllrohr 8 in axialer Richtung zueinander bewegbar sind, was die Fig. 6 und 7 erläutern sollen. Dort ist gezeigt, wie das Isoliermaterial entweder beim Einschieben des Einfüllrohres 8 in den Freiraum 6 der von der zylindrischen Halterung 2 aufgenommenen Metallprofile 4 und 5 oder beim Herausziehen des Einfüllrohres 8 aus dem Freiraum 6 erfolgen kann. Dabei wird es im Falle längerer Metallprofile 4/5 auch notwendig sein, dass sich das in deren Freiraum 6 axial bewegende Einfüllrohr 8 mindestens an seinem freien Ende mit einem dem Querschnitt des Freiraumes 6 angepassten Führungsstück 13 ausgerüstet ist.

Werden die den Fig. 6 und 7 zu entnehmenden Arbeitsgänge aufeinander folgend mit unterschiedlichen Umlauf geschwindigkeiten der Halterung 2 durchgeführt, so können sie ohne Leerhub des Einfüllrohres 8 zum Erzeugen der beiden Isolierschichten 11 und 12 der Fig. 5 dienen.

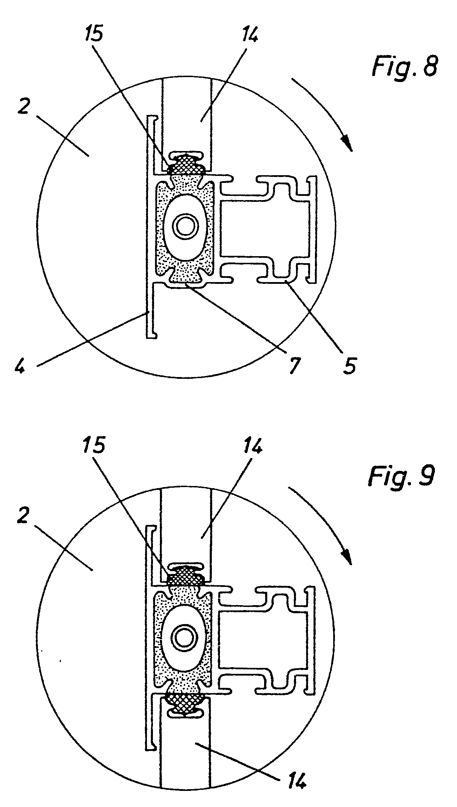

Andere Abwandlungen der in Fig. 1 gezeigten Vorrichtung ergeben sich nach den Fig. 8 und 9, wenn auf einen oder auch auf beide Verbindungsstege 7 der Metallprofile 4 und 5 verzichtet werden soll. Zu diesem Zweck müsste die zylindrische Halterung 2 mit radial dazu bewegbaren Schiebern 14 versehen sein, welche dann mit Hilfe geeigneter Dichtprofile 15 in der dargestellten Weise den Freiraum 6 während des Einbringens des Isoliermaterials 10 nach den metallisch nicht verbundenen Längsseiten des Verbundprofils hin abdichten würden.

## Patentansprüche

1. Verfahren zum Herstellen von wärmeisolierenden Verbundprofilen, welche aus mindestens zwei Metallprofilen (4, 5) sowie einem in einen zwischen diesen Metallprofilen (4, 5) vorgesehenen Freiraum (6) in flüssiger Form eingebrachten Isoliermaterial (10) gebildet werden, wobei das Isoliermaterial (10) im erhärteten Zustand den Freiraum (6) in der Art von die Metallprofile (4, 5) miteinander verbindenden Brücken nur teilweise ausfüllt und nach Erhärtung des Isoliermaterials (10) an gegenüberliegenden Längsseiten des Freiraumes (6) die metallische Verbindung unterbrochen wird, dadurch gekennzeichnet, dass die unter Bildung des für die Aufnahme des Isoliermaterials (10) bestimmten und nach den metallisch nicht verbundenen Längsseiten des Verbundprofils hin abgedichteten Freiraumes (6) gehaltenen Metallprofile (4, 5) um mindestens ein das Einbringen des flüssigen Isoliermaterials (10) bewirkendes, in den Freiraum (6) eingeführtes Einfüllrohr (8) rotierend gedreht und so alle Wände des allseitig geschlossenen Freiraumes (6) mit Isoliermaterial (10) beschichtet werden.

2. Verfahren nach Anspruch 1, dadurch gekennzeichnet, dass sich das mit radialen Sprühdüsen versehene Einfüllrohr (8) gegensinnig zu den Metallprofilen (4, 5) um seine Längsachse dreht.

3. Verfahren nach einem der beiden Ansprüche 1 oder 2, dadurch gekennzeichnet, dass die Umlaufgeschwindigkeit der Metallprofile (4, 5) und/oder des Einfüllrohres (8) geregelt wird.

4. Verfahren nach einem der Ansprüche 1 bis 3, dadurch gekennzeichnet, dass die Metallprofile (4, 5) und das Einfüllrohr (8) in axialer Richtung zueinander bewegt werden, wobei das sich im Freiraum (6) der Metallprofile (4, 5) axial bewegende Einfüllrohr (8) mindestens an seinem freien Ende mit einem dem Querschnitt des Freiraumes (6) angepassten Führungsstück (13) versehen wird.

5. Verfahren nach einem der vorhergehenden Ansprüche, dadurch gekennzeichnet, dass die miteinander zu verbindenden Metallprofile (4, 5) während des Einbringens des flüssigen Isoliermaterials (10) von einer auf zum Teil motorisch angetriebenen Führungsrollen (1) abgestützten zylindrischen Halterung (2) aufgenommen werden.

6. Verfahren nach Anspruch 5, dadurch gekennzeichnet, dass in der die Metallprofile (4, 5) während des Einbringens des Isoliermaterials (10) aufnehmenden zylindrischen Halterung (2) radial dazu bewegbare Schieber (14) angeordnet werden, die den Freiraum (6) seitlich abdichten.

## Claims

1. Process for producing heat-insulating composite profiles which are formed from at least two metal profiles (4, 5) and from an insulating material (10) introduced in liquid form into a free space (6) provided between these metal profiles (4, 5), the insulating material (10), in the hardened state, filling the free space (6) only partially, in the manner of bridges connecting the metal profiles (4, 5) to one another and, after the insulating material (10) has hardened, the metallic connection being broken on opposite longitudinal sides of the free space (6), characterised in that the metal profiles (4, 5), which are held together to form the free space (6) intended for receiving the insulating material (10) and sealed off on the longitudinal sides of the composite profile not connected to one another metallically, are rotated about at least one filling tube (8), effecting the introduction of the liquid insulating material (10), and inserted into the free space (6), and in that all the walls of the free space (6) closed on all sides are coated with insulating material (10) in this way.

2. Process according to claim 1, characterised in that the filling tube (8) provided with radial spray nozzles rotates about its longitudinal axis in an opposite direction to the metal profiles (4, 5).

3. Process according to claim 1 or 2, characterised in that the rotational speed of the metal profiles (4, 5) and/or of the filling tube (8) is regulated.

4. Process according to one of claims 1 to 3, characterised in that the metal profiles (4, 5) and the filling tube (8) are moved in an axial direction relative to one another, and the filling tube (8), moving axially in the free space (6) of the metal profiles (4, 5) is provided at least at its free end with a guide piece (13) adapted to the cross-section of the free space (6).

5. Process according to one of the preceding claims, characterised in that, during introduction of the liquid insulating material (10), the metal profiles (4, 5) to be connected to one another are received by a cylindrical retaining device (2) supported on partly motor-driven guide rollers (1).

6. Process according to claim 5, characterised in that located in the cylindrical retaining device (2), which receives the metal profiles (4, 5) during introduction of the insulating material (10), are slides (14) which are movable radially relative to this retaining device and which seal off the free space (6) laterally.

## Revendications

1. Procédé de fabrication d'éléments profilés composites isolants de la chaleur, qui sont formés d'au moins deux éléments profilés de métal (4, 5), ainsi que d'une matière isolante (10) ayant été déposée sous forme de liquide dans un espace libre (6) prévu entre ces deux éléments profilés (4, 5), la matière isolante (10), à l'état solidifié, ne remplissant qu'en partie l'espace libre (6), en y formant des ponts qui relient les éléments profilés en métal (4, 5) l'un à l'autre, et la liaison métallique étant coupée, après la solidification de la matière isolante (10), à des côtés longitudinaux opposés de l'espace libre (6), caractérisé en ce qu'on fait tourner les éléments profilés en métal (4, 5), maintenus pour la formation de l'espace libre (6) qui est destiné à recevoir la matière isolante (10) et dont l'étanchéité est assurée vers les côtés longitudinaux de l'élément profilé composite qui ne sont pas reliés métalliquement, autour d'au moins un tube de remplissage (8) qui assure l'apport de la matière isolante liquide (10) et qui est introduit dans l'espace libre (6), et en ce qu'ainsi, toutes les parois de l'espace libre (6), fermé de toutes parts, sont revêtues de matière isolante (10).

2. Procédé suivant la revendication 1, caractérisé en ce que le tube de remplissage (8), qui présente des ouvertures de pulvérisation radiales, tourne sur son axe longitudinal dans le sens opposé à celui des éléments profilés en métal (4, 5).

3. Procédé suivant l'une des revendications 1 ou 2, caractérisé en ce que la vitesse de rotation des éléments profilés en métal (4, 5) et/ou celle du tube de remplissage (8) sont réglées.

4. Procédé suivant l'une quelconque des revendications 1 à 3, caractérisé en ce que les éléments profilés en métal (4, 5) et le tube de remplissage (8) sont déplacés les uns par rapport à l'autre en direction axiale, le tube de remplissage (8), qui se déplace axialement dans l'espace libre (6) des éléments profilés en métal (4, 5), étant muni, au

**0 018 612**

moins à l'extrémité libre, d'un élément de guidage (13) adapté à la section transversale de l'espace libre (6).

5. Procédé suivant l'une quelconque des revendications précédentes, caractérisé en ce que les éléments profilés en métal (4, 5) à assembler l'un à l'autre sont contenus, pendant l'apport de la matière isolante liquide (10), par un support cylindrique (2) prenant appui sur des rouleaux de guidage (1) qui, en partie, sont commandés par moteur.

6. Procédé suivant la revendication 5, caractérisé en ce que, dans le support cylindrique (2) qui contient les éléments profilés en métal (4, 5) pendant l'apport de la matière isolante (10), il est prévu des curseurs (14) mobiles radialement par rapport à ce support, qui assurent latéralement l'étanchiété de l'espace libre (6).

Fig. 1

Fig. 2

Fig. 3

Fig. 4

Fig. 5

*Fig. 6*

*Fig. 7*

Fig. 8

Fig. 9